(19) Europäisches Patentamt
European Patent Office
Office européen des brevets

(11) EP 3 155 143 B1

(12) **EUROPEAN PATENT SPECIFICATION**

(45) Date of publication and mention of the grant of the patent:
**11.12.2019 Bulletin 2019/50**

(21) Application number: **15806992.2**

(22) Date of filing: **04.06.2015**

(51) Int Cl.:
***C25B 3/02*** *(2006.01)*

(86) International application number:
**PCT/US2015/034119**

(87) International publication number:
**WO 2015/191353 (17.12.2015 Gazette 2015/50)**

# (54) CONVERSION OF CARBOXYLIC ACIDS TO ALPHA-OLEFINS

UMWANDLUNG VON CARBONSÄUREN IN ALPHA-OLEFINE

CONVERSION D'ACIDES CARBOXYLIQUES EN ALPHA-OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2014 US 201462012053 P**

(43) Date of publication of application:
**19.04.2017 Bulletin 2017/16**

(73) Proprietor: **Enlighten Innovations Inc.**
**Calgary, AB T2G 1B1 (CA)**

(72) Inventors:
- **MOSBY, James**
  **Salt Lake City, Utah 84121 (US)**
- **MCGUIRE, Patrick**
  **Salt Lake City, Utah 84115 (US)**

(74) Representative: **HGF Limited**
**1 City Walk**
**Leeds LS11 9DX (GB)**

(56) References cited:
**US-A1- 2008 245 671**
**US-A1- 2011 027 848**
**US-A1- 2011 240 484**
**US-A1- 2012 197 050**
**US-A1- 2013 186 770**
**US-A1- 2013 203 953**
**US-A1- 2014 251 821**
**US-B1- 6 238 543**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 155 143 B1

## Description

### TECHNICAL FIELD

The present application relates to methods of preparing olefins from carboxylic acids, particularly using electrolytic techniques.

### BACKGROUND

For over a decade, government agencies like the U.S. Department of Energy have investigated biomass conversion into biofuels, bioproducts and biopower leading to advances in the research, development and deployment of different bioenergy technologies. The majority of this effort has focused on producing biofuels for the transportation markets, with successes in the renewable gasoline, biodiesel and bio-jet markets. Yet, the current large supply of natural gas and liquid petroleum from fracking technologies has made it difficult for biofuels to compete economically in these high-volume, low-margin markets.

The development of biofuels and other bioproducts has also resulted in the development of technologies for converting and upgrading those fuels and other bioproducts for specialty chemicals such as synthetic lubricants. High quality synthetic based oil is mainly composed of poly-alpha-olefins (PAOs), for which market demand outweighs available supply. The disparity between the supply and demand for PAOs arises because the necessary starting material is made using fractions of petroleum that are used in the production of kerosene and diesel. In most crude oil refineries, the later products take priority over the PAOs, and thus limited amounts of these fractions are diverted to make PAOs. To produce PAOs, not only is the volume of diesel and kerosene reduced, but the refinery must invest additional money and energy into converting the hydrocarbons from these fractions to alpha-olefins. This process produces a range of alpha-olefins, of which only a few have significant commercial value. One of the more valuable alpha-olefins, 1-dodecene (C12 alpha-olefin), is selectively used to make the PAOs for synthetic lubricants.

Another route currently used for the production of olefins requires steam cracking hydrocarbons to produce ultra-high-purity ethylene, followed by ethylene oligomerization that produces 1-decene (C10 alpha-olefin) and 1-dodecene. Because of the high production cost, the supply of C12 alpha-olefins available to make the PAOs synthetic oil is limited even though there is a large commercial market for this high performance oil. The higher market demand for PAO synthetic oil arises from their improved lubricating properties such as: higher viscosity index, lower temperature fluidity, lower volatility, better oxidative stability, greater thermal stability, and lower traction force.

Thus, there remains a need for alternative techniques for preparing alpha-olefins using hydrocarbon feedstock derived from biomass.

### SUMMARY OF THE INVENTION

The invention is defined by appended claim 1.

In one aspect, an electrochemical method of preparing olefins from an alkali metal salt of a carboxylic acid is disclosed. The method includes providing an electrochemical cell having an anolyte compartment, a catholyte compartment, and an alkali ion conductive membrane separating the anolyte compartment from the catholyte compartment. The method further includes providing an anolyte solution of an alkali metal salt of the carboxylic acid to the anolyte compartment. The anolyte solution has a pH in the range from about 8 to 14. An electrical potential is applied to the anode and cathode to electrochemically decarboxylate the alkali metal salt of the carboxylic acid into one or more olefins.

The anolyte compartment comprises an electrochemically active anode selected to perform a two-electron decarboxylation reaction of the alkali metal salt of the carboxylic acid, wherein the anode comprises a carbonaceous surface. The catholyte compartment comprises an electrochemically active cathode where reduction reactions occur. The alkali ion conductive membrane permits selective transport of alkali ions between the anolyte compartment and the catholyte compartment under influence of the electric potential.

In some embodiments, the current has a voltage between 2 and 20 volts. In other embodiments, the voltage is between 4 and 12 volts. In some embodiments, the current has a current density of between 5 and 100 $mA/cm^2$. In other embodiments, the current density is between 5 and 50 $mA/cm^2$. In some embodiments, the carboxylic acid is neutralized to have a pH between about 8 and 14. In other embodiments, the pH is between 9 and 13. In still other embodiments, the pH is between 10 and 12.

In some non-limiting embodiments, the method also includes mixing the alkali metal salt of the carboxylic acid with an organic solvent. In some embodiments the organic solvent comprises one or more organic alcohols and mixtures thereof. In some embodiments, the one or more organic alcohols are selected from the group consisting of: methanol, ethanol, propanol, isopropanol, butanol, and mixtures thereof. In other embodiments, the organic solvent is selected form the group consisting of: acetonitrile, dimethylformamide, sulfolane, pyridine, 2,6-pyridine, and mixtures of the same.

In some non-limiting embodiments, the method also includes adjusting the pH of the alkali metal salt of the carboxylic acid with a base. In some embodiments, the base is an alkali metal hydroxide. In some embodiments, the base is sodium hydroxide.

In some non-limiting embodiments, the method also includes mixing the alkali metal salt of the carboxylic acid with an electrolyte selected from the group consisting of: a metal halide, a metal nitrate, a metal sulfate, a metal perchlorate, and a metal tetrafluoroborate.

In some non-limiting embodiments, the alkali ion conducting membrane is a NaSICON membrane.

In some non-limiting embodiments, the method also includes fermenting biomass to produce the carboxylic acid and neutralizing the carboxylic acid with an alkali metal hydroxide to form the alkali metal salt of the carboxylic acid. The carboxylic acid may have an even number of carbon atoms. In some embodiments, the carboxylic acid is selected from the group consisting of: octanoic acid, decanoic acid, dodecanoic acid, tetradecanoic acid, hexadecanoic acid, and octadecanoic acid. In some embodiments, the carboxylic acid is dodecanoic acid.

In some embodiments, the one or more olefins is an alpha-olefin. In some embodiments, the one or more olefins is 1-undecene. In another aspect, a method further comprises oligomerizing the one or more olefins to make a synthetic lubricant.

An electrochemical cell or reactor for producing olefins is disclosed. The reactor includes an anolyte compartment, a catholyte compartment, an alkali ion conductive membrane, and a source of electric potential to operate the electrochemical reactor.

The anolyte compartment includes a solution of an alkali metal salt of a carboxylic acid. The solution has a pH in the range from about 8 to 14, and preferably a pH in the range from 9 to 13, and more preferably a pH in the range from about 10 to 12. The anolyte compartment includes an electrochemically active anode selected to perform a two-electron decarboxylation reaction of the alkali metal salt of carboxylic acid. In one embodiment, the anode comprises a carbonaceous surface.

The catholyte compartment houses an electrochemically active cathode where reduction reactions occur.

The alkali ion conductive membrane separates the anolyte compartment from the catholyte compartment and permits selective transport of alkali ions between the anolyte compartment and the catholyte compartment.

The source of electric potential is electrically connected to the anode and to the cathode.

## BRIEF DESCRIPTION OF THE DRAWINGS

Embodiments of the innovations described herein will be best understood by reference to the enclosed drawings. It will be readily understood that the components as generally described, could be arranged and designed in a wide variety of different configurations. Thus, the following more detailed description of the embodiments of the methods and cells of the present innovations is not intended to limit the scope of the invention, as claimed, but is merely representative of embodiments described herein.

FIG. 1 is a schematic representation of a possible electrochemical reactor that may be used in the disclosed method of preparing olefins from carboxylic acids.

FIG. 2A is a graph showing voltage and current density verses time for comparative one electron decarboxylation of sodium octanoate to a hydrocarbon dimer coupling product.

FIG. 2B is a gas chromatograph showing the resulting products from applying voltage and current densities for the decarboxylation process from FIG. 2A.

FIG. 3A is a graph showing voltage and current density verses time for a two electron decarboxylation of sodium dodecanoate to olefins.

FIG. 3B is a chromatograph showing the resulting products from applying voltage and current densities for the decarboxylation process from FIG. 3A.

## DETAILED DESCRIPTION

To address the aforementioned need for alternative techniques to efficiently produce olefins, the present disclosure describes an economically viable and novel upgrading process to produce olefins from carboxylic acids, including biomass, without using hydrogen gas or expensive catalysis. In one embodiment, the present technique is used for the production of alpha-olefins. The olefins produced can be a direct replacement of the olefins synthesized from crude oil for a variety of applications, including but not limiting to comonomers, PAO synthetic lubricants, drilling lubricants, and surfactants. Unlike the routes to producing olefins from petroleum, the method disclosed can selectively produce specific olefins with yields above 50% at moderate temperatures and pressures and without the use of a catalyst. Also, hydrogen gas can be concurrently produced in an electrochemical reactor such as with a two-compartment cell. This hydrogen can be recovered and used for other processes that require hydrogen input. Thus, the innovation can produce bio-derived olefins that are just an alternative to petroleum based olefins, but at an economical advantage.

Another benefit of the innovation is the resulting reduction in green-house gas (GHG) emissions relative to conventional production techniques of olefins. Such reductions arise from three aspects of the disclosed process: (1) the proposed electrochemical reactor produces olefins without the need for hydrogen gas for chemical reduction; (2) the source of feedstock of the olefins is renewable; and (3) and the reduced cost in producing poly-alpha-olefins will enable the greater availability and use of synthetic oil in the transportation market increasing fuel economy and reducing GHG emissions from combustion engines.

In one embodiment, the process uses an electrochemical reactor that converts an alkali metal salt of lauric acid (a twelve-carbon (C12) carboxylic acid), optionally produced from the fermentation of lignocellulose sugar, into a corresponding alpha-olefin, for example 1-undecene (also known as undec-1-ene).

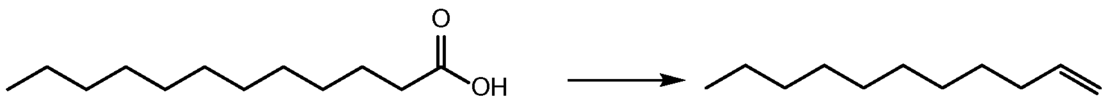

dodecanoic acid (lauric acid) undec-1-ene

The oxidation is carried out in a simple electrochemical reactor that can be used on a distributed scale, following the two electron oxidation reaction represented as:

$$C_{11}H_{23}CO_2M \rightarrow C_{11}H_{22} + CO_2 + 2e^- + M^+ + H^+$$

and for example where the metal (M) is sodium as:

$$C_{11}H_{23}CO_2Na \rightarrow C_{11}H_{22} + CO_2 + 2e^- + Na^+ + H^+$$

The process described herein is a two electron decarboxylation. In contrast, a one electron decarboxylation process is known as Kolbe electrolysis that results in radical coupling products that are undesirable according to the presently disclosed invention. Thus, two electron decarboxylation to produce olefins is desired according to the present invention, whereas one electron decarboxylation to produce radical coupling products is not desired.

Upon diffusing through an optional membrane, the alkali metal ions, for example sodium-ions, react with hydroxide anions produced by the corresponding reduction of water in the reaction shown below.

$$2Na^+ + 2H_2O + 2e^- \rightarrow 2NaOH + H_2$$

Thus, hydrogen and alkali hydroxide are produced at the cathode. The alkali hydroxide may optionally be used to saponify the feedstock carboxylic acid to form the alkali metal salt of the carboxylic acid as follows:

$$R\text{-}COOH + NaOH \rightarrow R\text{-}COONa + H_2O$$

Advantageously, the alkali hydroxide may be regenerated in the catholyte compartment as described above.

FIG. 1 schematically shows one possible electrochemical cell or reactor 100 that may be used in the electrochemical process of producing olefins within the scope of the present invention. The electrolytic cell 100 includes an anolyte compartment 110, a catholyte compartment 112, and an alkali ion conductive membrane 114 separating the anolyte compartment 110 from the catholyte compartment 112.

The anolyte compartment 110 comprises an electrochemically active anode 116 selected to perform a two-electron decarboxylation reaction of an alkali metal salt of a carboxylic acid. The anode 116 preferably comprises a carbonaceous surface. The catholyte compartment 112 comprises an electrochemically active cathode 118 where reduction reactions occur. The alkali ion conductive membrane 114 permits selective transport of alkali ions ($M^+$) 120 between the anolyte compartment 110 and the catholyte compartment 112 under influence of an electric potential 122 while preventing solvent or anion transfer between the anolyte and catholyte compartments. Alkali ions 120 include, but are not limited to, sodium ions, lithium ions, potassium ions and mixtures of the same.

The alkali ion conductive membrane 114 can be virtually any suitable alkali ion conductive membrane that selectively conducts alkali ions and prevents the passage of water, hydroxide ions, or other reaction products. The alkali ion conducting membrane 114may include a ceramic, a polymer, or combinations thereof. In one embodiment, the alkali ion conducting membrane is an alkali ion super ion conducting (MSICON) membrane. Some non-limiting examples of such membranes include, but are not limited to, a NaSICON (sodium super ionic conductor membrane) and a NaSICON-type membrane. The alkali ion conductive membrane may be any of a number of sodium super ion conducting materials,

including, without limitation, those disclosed in United States Patent Application Publications Nos. 2010/0331170 and 2008/0245671 and in U.S. Pat. No. 5,580,430. In some embodiments, a sodium selective ceramic membrane NaSelect® (Ceramatec, Salt Lake City, Utah USA) may be used.

Where other non-sodium alkali metals are used, it is to be understood that similar alkali ion conductive membranes such as a LiSICON membrane, a LiSICON-type membrane, a KSICON membrane, a KSICON-type membrane may be used. In some embodiments, an alkali ion conducting ion-exchange polymeric membrane may be used. In some embodiments, the alkali ion conducting membrane may comprise an alkali ion conductive glass or beta alumina.

The electrochemical cell 100 may be a parallel plate configuration where flat plate electrodes and membranes are used. The anode 116 can be any suitable anode material that allows two-electron oxidation (decarboxylation) reaction in the anolyte compartment 110 when electrical potential 122 passes between the anode 116 and the cathode 118. Some non-limiting examples of suitable anode materials include carbonaceous electrodes or electrodes with carbonaceous surfaces such as natural or artificial graphite, graphite nanopowder, acetylene black, Super P® (available from Westlake Chemical, Westlake, Ohio), MesoCarbon, high surface active carbon, glassy carbon, carbon nanotubes, and graphene.

The cathode 118 may be any suitable cathode that allows the cell to reduce water, methanol, or other suitable electrolyte containing-solvent in the catholyte compartment 112 to produce hydroxide ions, methoxide ions, or other corresponding organic oxide ions and hydrogen gas. Some non-limiting examples of suitable cathode materials include, without limitation, nickel, stainless steel, graphite, and any other suitable cathode material that is known or novel.

In one embodiment, the electrolytic cell 100 is operated by feeding or otherwise providing an anolyte solution 124 into the anolyte compartment 110. The anolyte solution 124 includes a solvent and a carboxylic acid or an alkali metal salt of carboxylic acid. The alkali metal salt of the carboxylic acid can be obtained by reacting the carboxylic acid with alkali metal hydroxide, for example sodium hydroxide (NaOH), lithium hydroxide (LiOH), and potassium hydroxide (KOH).

The carboxylic acid can be obtained from a variety of sources, including biomass. Some examples of suitable carboxylic acids are fatty acids listed in Table 1. In some embodiments, the carboxylic acid has from 6-20 carbon atoms. In some embodiments, the carboxylic acid has from 6-12 carbon atoms. In some embodiments, the carboxylic acid has from 16-18 carbon atoms. In some embodiments, the carboxylic acid has from 12-18 carbon atoms. According to the invention the carboxylic acid has from 7-20 carbon atoms.

Table 1.

| Number of carbon atoms | Common name | IUPAC name |
|---|---|---|
| 6 | Caproic acid | Hexanoic acid |
| 7 | Enanthic acid | Heptanoic acid |
| 8 | Caprylic acid | Octanoic acid |
| 9 | Pelargonic acid | Nonanoic acid |
| 10 | Capric acid | Decanoic acid |
| 11 | Undecylic acid | Undecanoic acid |
| 12 | Lauric acid | Dodecanoic acid |
| 13 | Tridecylic acid | Tridecanoic acid |
| 14 | Myristic acid | Tetradecanoic acid |
| 15 | | Pentadecanoic acid |
| 16 | Palmitic acid | Hexadecanoic acid |
| 17 | Margaric acid | Heptadecanoic acid |
| 18 | Stearic acid | Octadecanoic acid |
| 19 | | Nonadecanoic acid |
| 20 | Arachidic acid | Icosanoic acid |

As can be appreciated by one of skill in the art, a decarboxylation using the techniques disclosed herein would result in the loss of one carbon atom from any of the fatty acids identified in Table 1. Thus, in some embodiments, the resulting olefins have from 5-19 carbon atoms. In some embodiments, the olefins have from 5-11 carbon atoms. In some

embodiments, the olefins have from 15-17 carbon atoms. In some embodiments, the olefins have from 11-17 carbon atoms.

The anolyte solution 124 may include one or more solvents. In some embodiments, the solvent may be an organic lower alkanol such as methanol, ethanol, propanol, isopropanol, butanol, or mixtures of the same. In some embodiments, the solvent may be acetonitrile, dimethylformamide, sulfolane, pyridine, 2,6-pyridine, and mixtures of the same. In some embodiments the solvent may be comprised of an ionic liquid. In other embodiments that solvent may be comprised of a molten salt. It should be clear to those familiar with the art that the choice of solvent for the anolyte will be determined in part by the carboxylic acid or alkali carboxylate solubility, the electrochemical stability of the solvent, the lack of nucleophilic nature, and other properties that improve the 2 electron oxidation and subsequent E1 elimination reaction.

The anolyte solution 124 may optionally contain a supporting electrolyte that is soluble in the solvent and which provides high electrolyte conductivity in the anolyte solution. One non-limiting example of a supporting electrolyte includes an alkali metal tetrafluoroborate. Another example may include tetramethylammonium hexafluorophosphate. Other ionic solids may also be used such as metal halides, nitrates, sulfates, perchlorates, and mixtures of the same. In one embodiment, supporting electrolytes that act as a Bronsted base are used. In such a case, the supporting electrolyte not only increases the conductivity of the anolyte solution, it also increases the rate of the olefin formation by promoting an E1 elimination reaction.

An electrical potential 122 is applied to the anode 116 and cathode 118 to electrochemically decarboxylate the alkali metal salt of the carboxylic acid into one or more olefins 126 and carbon dioxide ($CO_2$) 128. The olefins produced include alpha olefins and internal linear olefins. The carbon number of the olefin produced depends on the carboxylic acid or alkali carboxylate salts used in the decarboxylation. In one embodiment the decarboxylation of laurate (C12) produces the C11 alpha-olefin, 1-undecene, and also the internal linear olefins such as 2-undecene, 3-undecene, 4-undecene, and 5-undecene, and mixtures of the same.

The electric potential 122 may be applied at a voltage of between 2 and 30 V. In some embodiments, the voltage applied is between 4 and 18 V. In some embodiments, the voltage applied is between 4 and 12 V. The electric potential may be applied with a current density of between 5 and 100 $mA/cm^2$. In some embodiments, the current density is between 5 and 50 $mA/cm^2$. According to the invention, the anolyte solution 110 has a pH in the range from about 8 to 14. In other embodiments, the anolyte solution 110 has a pH in the range from about 9 to 13. In still other embodiments, the anolyte solution 110 has a pH in the range from about 10 to 12. It should be understood by those of ordinary skill that the electrical potential, current density, and pH can be controlled to modify the ratio of olefins produced by the electrochemical decarboxylation.

In some non-limiting embodiments, the anolyte compartment may have an operating temperature in the range from 50°C to 150°C. It is believed that a temperature greater than ambient temperature (>20°C) may facilitate the decarboxylation reaction to produce olefins.

In some embodiments, a catholyte solution 130 is provided into the catholyte compartment 112. The catholyte solution 130 may comprise a solvent that is the same or different than the anolyte solvent. The anolyte and catholyte solvents may be different because the alkali conductive membrane 114 isolates the compartments and from each other. The catholyte solvent may comprise a mixture of solvents with or without water. In the embodiment shown in FIG. 1, the catholyte solution comprises water. At least initially, the catholyte solution includes alkali ions, which may be in the form of an unsaturated alkali hydroxide solution. The concentration of alkali hydroxide can be between about 0.1% by weight and about 50% by weight of the solution. In one embodiment, the catholyte solution includes a dilute solution of alkali hydroxide. During operation, the source of alkali ions may be provided by alkali ions transporting across the alkali ion conductive membrane from the anolyte compartment to the catholyte compartment. While alkali hydroxide is used in the following discussion and shown in FIG. 1, persons skilled in the art will appreciate that methanol may substitute alkali hydroxide in the apparatus for preparing alkali methylate instead. Thus, the catholyte solution may include methanol.

At the cathode 118, reduction of water to form hydrogen gas 132 and hydroxide ions takes place (Reaction 1). The hydroxide ions react with available alkali ions ($M^+$) 120 transported from anode compartment 110 via the alkali conductive membrane 114 to form alkali hydroxide as shown in Reaction 2. The alkali hydroxide 134 may be recovered from the catholyte compartment 112.

$$2H_2O+2e^- \rightarrow H_2+2OH^- \quad (1)$$

$$M^++2H_2O+2e^- \rightarrow 2MOH+H_2 \quad (2)$$

In the case of catholyte solution 130 having methanol, methoxide ions will react with available alkali ions to form alkali methoxide as shown in Reaction 3. The alkali methoxide may be recovered from the catholyte compartment 112.

$$2M^{+}+2CH_3OH+2e^{-}\rightarrow 2MOCH_3+H_2 \qquad (3)$$

It will be appreciated that the catholyte solution comprises a base which may be used to neutralize the carboxylic acid to produce the alkali metal salt of the carboxylic acid. Thus, the base consumed in the acid neutralization step may be produced in the catholyte compartment, recovered, and re-used in acid neutralization reactions or other chemical processes.

In one embodiment, the electrolytic cell may be operated in a continuous mode. In a continuous mode, the cell is initially filled with anolyte solution and catholyte solution and then, during operation, additional solutions are fed into the cell and products, by-products, and/or diluted solutions are removed from the cell without ceasing operation of the cell. The feeding of the anolyte solution and catholyte solution may be done continuously or it may be done intermittently, meaning that the flow of a given solution is initiated or stopped according to the need for the solution and or to maintain desired concentrations of solutions in the cell compartments, without emptying any one individual compartment or any combination of the two compartments. Similarly, the removal of solutions from the anolyte compartment and the catholyte compartment may also be continuous or intermittent. Control of the addition and or removal of solutions from the cell may be done by any suitable means. Such means include manual operation, such as by one or more human operators, and automated operation, such as by using sensors, electronic valves, laboratory robots, etc. operating under computer or analog control. In automated operation, a valve or stopcock may be opened or closed according to a signal received from a computer or electronic controller on the basis of a timer, the output of a sensor, or other means. Examples of automated systems are well known in the art. Some combination of manual and automated operation may also be used. Alternatively, the amount of each solution that is to be added or removed per unit time to maintain a steady state may be experimentally determined for a given cell, and the flow of solutions into and out of the system set accordingly to achieve the steady state flow conditions.

In another embodiment, the electrolytic cell is operated in batch mode. In batch mode, the anolyte solution and catholyte solution are fed initially into the cell and then the cell is operated until the desired concentration of product is produced in the anolyte and catholyte. The cell is then emptied, the products collected, and the cell refilled to start the process again. Alternatively, combinations of continuous mode and batch mode production may be used. Also, in either mode, the feeding of solutions may be done using a pre-prepared solution or using components that form the solution in situ.

It should be noted that both continuous and batch mode have dynamic flow of solutions. In one embodiment of continuous mode operation, the anolyte solution is added to the anolyte compartment so that the sodium concentration is maintained at a certain concentration or concentration range during operation of the electrolytic cell. In one embodiment of batch mode operation, a certain quantity of alkali ions are transferred through the alkali ion conductive membrane to the catholyte compartment and are not replenished, with the cell operation is stopped when the alkali ion concentration in the anolyte compartment reduces to a certain amount or when the appropriate product concentration is reached in the catholyte compartment.

In some embodiments, the resulting alpha-olefins may be oligomerized to poly-alpha olefins (PAOs) by conventional techniques to synthetic oils. In one embodiment, the C11 olefins are oligomerized to produce poly-internal-olefins (PIOs) by conventional techniques and thereby produce synthetic oil.

In some embodiments, the entire process is hydrogen-independent. In some embodiments, the process requires small amounts of electricity. In some embodiments, the electrochemical reactor can be commercialized for distributed manufacturing of the olefins. In some embodiments, the sodium salt of lauric acid obtained from fermentation from biomass can be directly fed into the membrane reactor, thereby obviating the need for any separation or purification. In some embodiments, the electrochemical reactor uses inexpensive electrode materials with low power consumption. In some embodiments, the resulting alpha-olefins are oligomerized to produce a synthetic bio-lubricant.

## EXAMPLES

Several examples will be given to demonstrate the technical feasibility of producing olefins via the decarboxylation of carboxylic acids or alkali carboxylates. The examples demonstrate the decarboxylation of sodium salts of carboxylic acids using electrolytic cells equipped with a NaSelect® NaSICON membrane manufactured by Ceramatec, Inc., Salt Lake City, Utah.

The examples disclosed herein, used an experimental setup which consisted of a micro flow cell, allowing both the anolyte and catholyte to be pumped through the cell while minimizing the distance between the electrodes and the membrane. The membranes used in the examples consisted of 2.54 cm diameter NaSICON disks of about 1 mm thickness that were housed on scaffolds in the center of the cells. As the scaffold and membrane physically separate the anode and cathode compartments, there was a separate reservoir and temperature controlled hotplate for the anolyte and catholyte. This allowed the chemistry and conditions of each electrolyte to be optimized for the respective electrode reactions. A multiple-head peristaltic pump was used to pump both electrolyte solutions into the electrolysis cell. The

tubing between the cell, pump, and reservoir was insulated for temperature sensitive electrolytes.

The anolyte solution that contains the sodium salt of the carboxylic acid, was made by dissolving at least 10% of the salt into a solvent system consisting of different mixtures that contain water, methanol, ethanol, and butanol. The sodium salts were prepared in separate solutions following conventional saponification reactions followed by dissolution of the prepared salt into an electrolyte solution. For this method, a general saponification product was used during which the sodium carboxylate forms as the carboxylic acid is neutralized. The details of the electrolyte preparation will be given in the different examples. The catholyte was made from aqueous sodium hydroxide solutions. To obtain low solution resistance the temperature of the electrolyte were increased to 50 °C to improve both the solubility and conductivity.

Once the reservoirs reached the desired temperature, a power supply was connected and a current density between 10 and 100 mA/cm$^2$ was applied. During electrolysis, the voltage and current were monitored using a Data Acquisition Unit (Agilent 3490A) controlled by LabVIEW software. The applied current density caused oxidation to occur at the anode (smooth platinum or graphite) and reduction to occur at the cathode (nickel), with each electrode having a surface area of 11 cm$^2$. As the power supply transport electrons from the anode to the cathode, a charge balance must be maintained across the cell by the diffusion or positively charge ions. Given the high selectivity of the NaSICON membrane for Na-ions, sodium ions are the only species that can provide this balance. Thus a high concentration of the sodium salts was desired and used.

To separate the olefins from the electrolyte, hexane was used to perform liquid-liquid extraction. After the extraction, the olefins were analyzed in the hexane using, IR (Bruker, Tensor 37), GC (Bruker, SICON 465), and GC-MS (Bruker, SCION465 GC-SQ). The olefins could be isolated and purified by removing the hexane using a slight vacuum and low heat affording the recovered olefins at a 98% purity level.

**Comparative Example 1**

To show the conventional product selectivity of the one electron Kolbe electrolysis, a reaction was performed using 10% sodium octanoate dissolved in a water methanol solution as the anolyte having a pH of 8. 10% aqueous sodium hydroxide was used as the catholyte. The catholyte was heated to 50 °C and the anolyte was maintained at room temperature. The electrolysis was conducted in batch mode, during which the anolyte and catholyte were cycled through the corresponding anode and cathode compartments of the cell. The cell was operated until enough charge passed to theoretically convert 80% of the sodium octanoate. As shown in FIG. 2A the electrolysis was conducted at a constant current density of 65 mA/cm$^2$, which produced a cell potential of 8 V.

The reactions that occurred during the electrolysis in the anode and cathode compartment are shown below.

$$C_7H_{15}CO_2Na \rightarrow C_7H_{15}^{\cdot} + CO_2 + Na^+ + e^-$$

$$H_2O + e^- \rightarrow H_2 + OH^-$$

The conditions used in this example promoted the radical-radical coupling and produced tetradecane according to the reaction below.

$$2C_7H_{15}^{\cdot} \rightarrow C_{14}H_{30}$$

After the electrolysis was complete the product was extracted/removed from the electrolyte using liquid-liquid extraction with hexane. The product of the electrolysis was then analyzed using GC-MS, producing the GC shown in FIG. 2B. From this it was determined that the product distribution was 80% tetradecane, 5% heptanol, 10% esters, and 5% heptenes.

**Example 2**

The electrolysis conditions from Example 1 were changed to show the selective production of olefins instead of paraffins using the techniques disclosed herein. One difference between the two examples that caused the change in product selectivity was the use of a graphite electrode in this example while a platinum electrode was used in Example 1. For this example, 10% sodium laurate was dissolved in an electrolyte containing a mixture of methanol, butanol, and water having a pH of 10.5. The catholyte consisted of 10% aqueous sodium hydroxide. The catholyte and anolyte were heated to 50 °C. Electrolysis was conducted in batch mode during which the anolyte and catholyte were cycled through the corresponding anode and cathode compartments of the cell. The cell was operated until enough charge passed to

theoretically convert 80% of the sodium laurate. As shown in FIG. 3A, electrolysis was conducted at a constant cell potential of 4 V and a current density of 20 mA/$cm^2$.

The reactions that occurred during the electrolysis in the anode and cathode compartment are shown below.

$$C_{11}H_{23}CO_2Na \rightarrow C_{11}H_{23}^{+} + CO_2 + Na^{+} + 2e^{-} + H^{+}$$

$$H_2O + e^- \rightarrow H_2 + OH^-$$

The conditions used in this example promoted the two electron oxidation, after which the carbocation could undergo either $S_N1$ substitution reactions forming alcohols, or E1 elimination reactions forming olefins as shown in the reactions below.

$$C_{11}H_{23}^{+} + H_2O \rightarrow C_{11}H_{23}OH + H^{+}$$

$$C_{11}H_{23}^{+} + OH^{-} \rightarrow C_{11}H_{22} + H_2O$$

After the electrolysis was complete the product was extracted/removed from the electrolyte using liquid-liquid extraction with hexane. The product of the electrolysis was then analyzed using GC-MS, producing the gas chromatogram shown in FIG. 3B. From this it was determined that the product distribution was <5% docosane, 40% undecanol, <5% esters, and over 50% undecenes. Of the undecenes, 50% corresponded to the alpha-olefin, 1-undecene.

It will be appreciated that the disclosed invention provides an electrochemical method of preparing olefins from alkali metal salts of carboxylic acids. Low-cost, renewable biomass may provide a source of alkali metal salts of carboxylic acids.

## Claims

**1.** An electrochemical method of preparing olefins from an alkali metal salt of a carboxylic acid, comprising:

providing an electrochemical cell comprising:

an anolyte compartment comprising an electrochemically active anode adapted to perform a two-electron decarboxylation reaction of an alkali metal salt of a carboxylic acid, wherein the anode comprises a carbonaceous surface;
a catholyte compartment comprising an electrochemically active cathode where reduction reactions occur;
an alkali ion conductive membrane separating the anolyte compartment from the catholyte compartment that permits selective transport of alkali ions between the anolyte compartment and the catholyte compartment;

providing an anolyte solution comprising an alkali metal salt of the carboxylic acid to the anolyte compartment, wherein the solution has a pH in the range from 8 to 14; and
applying an electrical potential to the anode and cathode to electrochemically decarboxylate the carboxylic acid salt into one or more olefins;
wherein the alkali metal salt of the carboxylic acid is derived from a carboxylic acid selected from the group consisting of heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and icosanoic acid.

**2.** The method of claim 1, wherein the cell has a voltage between 2 and 20 volts.

**3.** The method of claim 1 or claim 2, wherein a current density of between 5 and 100 mA/$cm^2$ is applied to the anode.

**4.** The method of any preceding claim, wherein the solution has a pH in the range of 10 to 12.

5. The method of any preceding claim, further comprising mixing the alkali metal salt of the carboxylic acid with an organic solvent; optionally wherein the organic solvent comprises one or more organic alcohols and mixtures thereof; further optionally wherein the one or more organic alcohols are selected from the group consisting of: methanol, ethanol, propanol, isopropanol, butanol, and mixtures of the same; or optionally wherein the organic solvent is selected from the group consisting of: acetonitrile, dimethylformamide, sulfolane, pyridine, 2,6-pyridine, and mixtures thereof.

6. The method of any preceding claim, further comprising adjusting the pH of the alkali metal salt of the carboxylic acid with a base; optionally wherein the base is an alkali metal hydroxide.

7. The method of any preceding claim, further comprising mixing the alkali metal salt of the carboxylic acid with an electrolyte selected from the group consisting of: a metal halide, a metal nitrate, a metal sulfate, a metal perchlorate, and a metal tetrafluoroborate.

8. The method of any preceding claim, wherein the alkali ion conducting membrane is a NaSICON membrane.

9. The method of any preceding claim, further comprising fermenting biomass to produce a carboxylic acid and neutralizing the carboxylic acid with an alkali metal hydroxide to form the alkali metal salt of the carboxylic acid.

10. The method of any preceding claim, wherein the one or more olefins comprises an alpha-olefin.

11. The method of any preceding claim, wherein the olefin comprises 1-undecene.

12. The method of any preceding claim, further comprising oligomerizing the one or more olefins to make a synthetic lubricant.

13. The method of any preceding claim, wherein the anolyte compartment has an operating temperature in the range from 50°C to 150°C.

14. The method of any preceding claim, wherein the alkali metal salt of the carboxylic acid is derived from a carboxylic acid selected from the group consisting of: octanoic acid, decanoic acid, dodecanoic acid, tetradecanoic acid, hexadecanoic acid, and octadecanoic acid.

## Patentansprüche

1. Elektrochemisches Verfahren zur Herstellung von Olefinen aus einem Alkalimetallsalz einer Carbonsäure, umfassend:
Bereitstellen einer elektrochemischen Zelle, umfassend:

    ein Anolytenkompartiment umfassend eine elektrochemisch aktive Anode, die dafür ausgelegt ist, eine Zweielektronen-Decarboxylierungsreaktion eines Alkalimetallsalzes einer Carbonsäure durchzuführen, wobei die Anode eine kohlenstoffhaltige Oberfläche umfasst;
    ein Katholytenkompartiment umfassend eine elektrochemisch aktive Kathode, wo Reduktionsreaktionen auftreten;
    eine Alkaliionen leitende Membran, die das Anolytenkompartiment von dem Katholytenkompartiment trennt, die selektiven Transport von Alkaliionen zwischen dem Anolytenkompartiment und dem Katholytenkompartiment gestattet;
    Bereitstellen einer Anolytenlösung umfassend ein Alkalimetallsalz der Carbonsäure an das Anolytenkompartiment, wobei die Lösung einen pH-Wert in dem Bereich von 8 bis 14 aufweist; und
    Anlegen eines elektrischen Potenzials an die Anode und Kathode, um das Carbonsäuresalz elektrochemisch in ein oder mehrere Olefine zu decarboxylieren;
    wobei das Alkalimetallsalz der Carbonsäure aus einer Carbonsäure abgeleitet ist, die ausgewählt ist aus der Gruppe bestehend aus Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure und Eicosansäure.

2. Verfahren nach Anspruch 1, wobei die Zelle eine Spannung zwischen 2 und 20 Volt aufweist.

**3.** Verfahren nach Anspruch 1 oder Anspruch 2, wobei eine Stromdichte von zwischen 5 und 100 mA/$cm^2$ an die Anode angelegt wird.

**4.** Verfahren nach einem vorhergehenden Anspruch, wobei die Lösung einen pH-Wert in dem Bereich von 10 bis 12 aufweist.

**5.** Verfahren nach einem vorhergehenden Anspruch, ferner umfassend das Mischen des Alkalimetallsalzes der Carbonsäure mit einem organischen Lösungsmittel; wahlweise, wobei das organische Lösungsmittel einen oder mehrere organische Alkohole und Gemische davon umfasst; ferner wahlweise, wobei der eine oder mehrere organische Alkohole ausgewählt sind aus der Gruppe bestehend aus: Methanol, Ethanol, Propanol, Isopropanol, Butanol und Gemischen derselben; oder wahlweise, wobei das organische Lösungsmittel ausgewählt ist aus der Gruppe bestehend aus: Acetonitril, Dimethylformamid, Sulfolan, Pyridin, 2,6-Pyridin und Gemischen davon.

**6.** Verfahren nach einem vorhergehenden Anspruch, ferner umfassend das Einstellen des pH-Wertes des Alkalimetallsalzes der Carbonsäure mit einer Base; wahlweise, wobei die Base ein Alkalimetallhydroxid ist.

**7.** Verfahren nach einem vorhergehenden Anspruch, ferner umfassend das Mischen des Alkalimetallsalzes der Carbonsäure mit einem Elektrolyten, der ausgewählt ist aus der Gruppe bestehend aus: einem Metallhalid, einem Metallnitrat, einem Metallsulfat, einem Metallperchlorat und einem Metalltetrafluorborat.

**8.** Verfahren nach einem vorhergehenden Anspruch, wobei die Alkaliionen leitende Membran eine NaSICON-Membran ist.

**9.** Verfahren nach einem vorhergehenden Anspruch, ferner umfassend Fermentieren von Biomasse, um eine Carbonsäure herzustellen, und Neutralisieren der Carbonsäure mit einem Alkalimetallhydroxid, um das Alkalimetallsalz der Carbonsäure zu bilden.

**10.** Verfahren nach einem vorhergehenden Anspruch, wobei das eine oder mehrere Olefine ein Alpha-Olefin umfasst/umfassen.

**11.** Verfahren nach einem vorhergehenden Anspruch, wobei das Olefin 1-Undecen umfasst.

**12.** Verfahren nach einem vorhergehenden Anspruch, ferner umfassend Oligomerisieren des einen oder mehrerer Olefine, um einen synthetischen Schmierstoff herzustellen.

**13.** Verfahren nach einem vorhergehenden Anspruch, wobei das Anolytenkompartiment eine Betriebstemperatur in dem Bereich von 50 °C bis 150 °C aufweist.

**14.** Verfahren nach einem vorhergehenden Anspruch, wobei das Alkalimetallsalz der Carbonsäure aus einer Carbonsäure abgeleitet ist, die ausgewählt ist aus der Gruppe bestehend aus: Octansäure, Decansäure, Dodecansäure, Tetradecansäure, Hexadecansäure und Octadecansäure.

## Revendications

**1.** Procédé électrochimique de préparation d'oléfines à partir d'un sel de métal alcalin d'un acide carboxylique, comprenant :
l'apport d'une cellule électrochimique comprenant :

un compartiment d'anolyte comprenant une anode électrochimiquement active conçue pour effectuer une réaction de décarboxylation à deux électrons d'un sel de métal alcalin d'un acide carboxylique, dans lequel l'anode comprend une surface carbonée ;
un compartiment de catholyte comprenant une cathode électrochimiquement active dans laquelle des réactions de réduction se produisent ;
une membrane conductrice d'ions alcalins séparant le compartiment d'anolyte du compartiment de catholyte qui permet le transport sélectif d'ions alcalins entre le compartiment d'anolyte et le compartiment de catholyte ;
l'apport d'une solution d'anolyte comprenant un sel de métal alcalin de l'acide carboxylique au compartiment d'anolyte, dans lequel la solution a un pH dans la plage allant de 8 à 14 ; et

l'application d'un potentiel électrique à l'anode et à la cathode afin de décarboxyler électrochimiquement le sel d'acide carboxylique en au moins une oléfine ;
dans lequel le sel de métal alcalin de l'acide carboxylique est dérivé d'un acide carboxylique choisi dans le groupe constitué de l'acide heptanoïque, de l'acide octanoïque, de l'acide nonanoïque, de l'acide décanoïque, de l'acide undécanoïque, de l'acide dodécanoïque, de l'acide tridécanoïque, de l'acide tétradécanoïque, de l'acide pentadécanoïque, de l'acide hexadécanoïque, de l'acide heptadécanoïque, de l'acide octadécanoïque, de l'acide nonadécanoïque et de l'acide icosanoïque.

**2.** Procédé selon la revendication 1, dans lequel la cellule a une tension comprise entre 2 et 20 volts.

**3.** Procédé selon la revendication 1 ou la revendication 2, dans lequel une densité de courant comprise entre 5 et 100 $mA/cm^2$ est appliquée à l'anode.

**4.** Procédé selon l'une quelconque des revendications précédentes, dans lequel la solution a un pH compris dans la plage allant de 10 à 12.

**5.** Procédé selon l'une quelconque des revendications précédentes, comprenant en outre le mélange du sel de métal alcalin de l'acide carboxylique avec un solvant organique ; dans lequel le solvant organique comprend éventuellement au moins un alcool organique et des mélanges de ceux-ci ; de plus dans lequel l'au moins un alcool organique est éventuellement choisi dans le groupe constitué : du méthanol, de l'éthanol, du propanol, de l'isopropanol, du butanol et de mélanges de ceux-ci ; ou dans lequel le solvant organique est éventuellement choisi dans le groupe constitué : de l'acétonitrile, du diméthylformamide, du sulfolane, de la pyridine, de la 2,6-pyridine et de mélanges de ceux-ci.

**6.** Procédé selon l'une quelconque des revendications précédentes, comprenant en outre l'ajustement du pH du sel de métal alcalin de l'acide carboxylique avec une base ; dans lequel la base est éventuellement un hydroxyde de métal alcalin.

**7.** Procédé selon l'une quelconque des revendications précédentes, comprenant en outre le mélange du sel de métal alcalin de l'acide carboxylique avec un électrolyte choisi dans le groupe constitué : d'un halogénure de métal, d'un nitrate de métal, d'un sulfate de métal, d'un perchlorate de métal et d'un tétrafluoroborate de métal.

**8.** Procédé selon l'une quelconque des revendications précédentes, dans lequel la membrane conductrice d'ions alcalins est une membrane de NaSICON.

**9.** Procédé selon l'une quelconque des revendications précédentes, comprenant en outre la fermentation de la biomasse afin de produire un acide carboxylique et la neutralisation de l'acide carboxylique avec un hydroxyde de métal alcalin afin de former le sel de métal alcalin de l'acide carboxylique.

**10.** Procédé selon l'une quelconque des revendications précédentes, dans lequel l'au moins une oléfine comprend une alpha-oléfine.

**11.** Procédé selon l'une quelconque des revendications précédentes, dans lequel l'oléfine comprend du 1-undécène.

**12.** Procédé selon l'une quelconque des revendications précédentes, comprenant en outre l'oligomérisation d'au moins une oléfine afin de fabriquer un lubrifiant synthétique.

**13.** Procédé selon l'une quelconque des revendications précédentes, dans lequel le compartiment d'anolyte a une température de fonctionnement dans la plage allant de 50 °C à 150 °C.

**14.** Procédé selon l'une quelconque des revendications précédentes, dans lequel le sel de métal alcalin de l'acide carboxylique est dérivé d'un acide carboxylique choisi dans le groupe constitué : de l'acide octanoïque, de l'acide décanoïque, de l'acide dodécanoïque, de l'acide tétradécanoïque, de l'acide hexadécanoïque et de l'acide octadécanoïque.

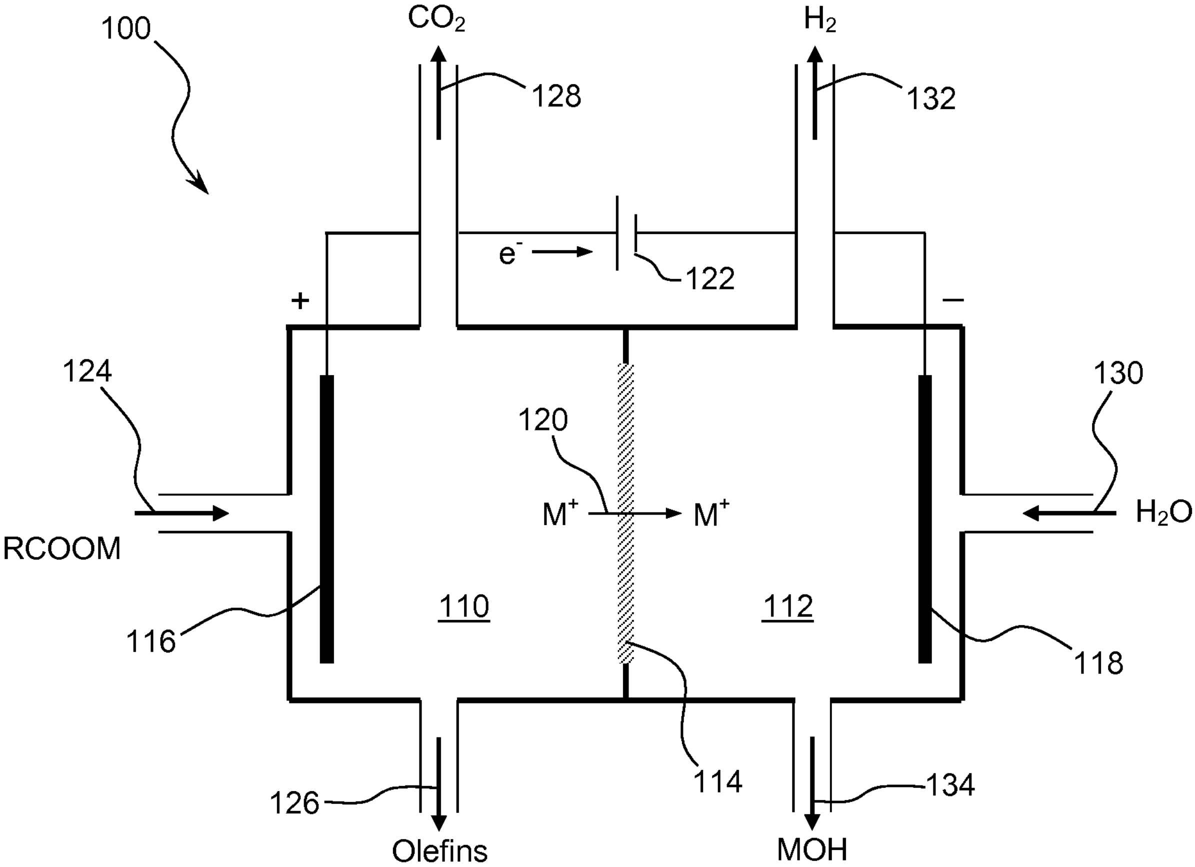
100
CO2
128
H2
132
e-
122
+
–
124
130
120
M+
M+
RCOOM
H2O
116
110
112
118
114
126
134
Olefins
MOH

FIG. 1

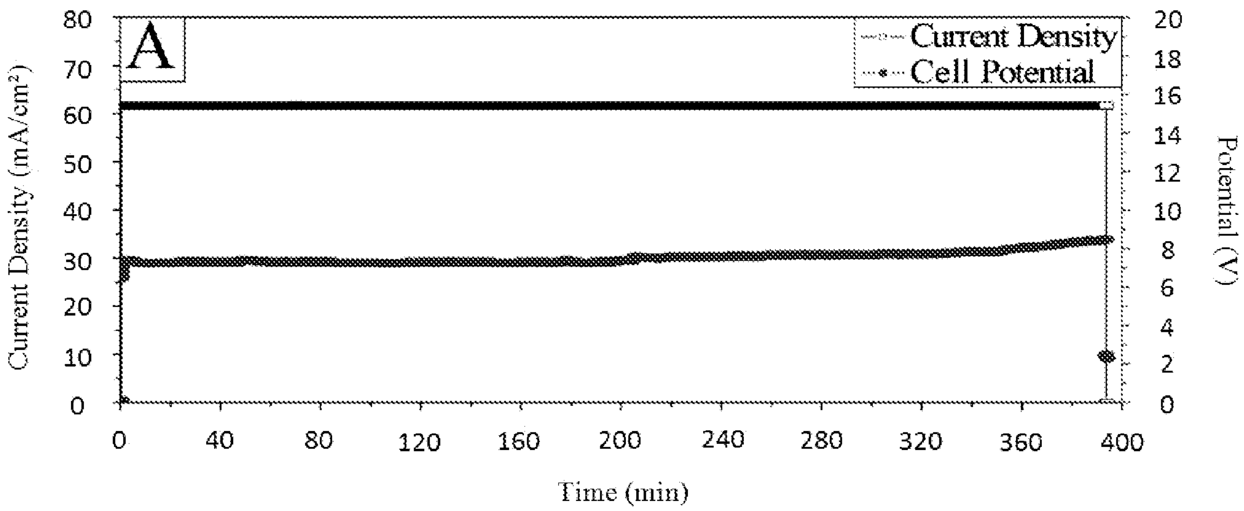
A
Current Density
Cell Potential
Current Density (mA/cm²)
Potential (V)
Time (min)
0
10
20
30
40
50
60
70
80
0
2
4
6
8
10
12
14
16
18
20
0
40
80
120
160
200
240
280
320
360
400

FIG. 2A

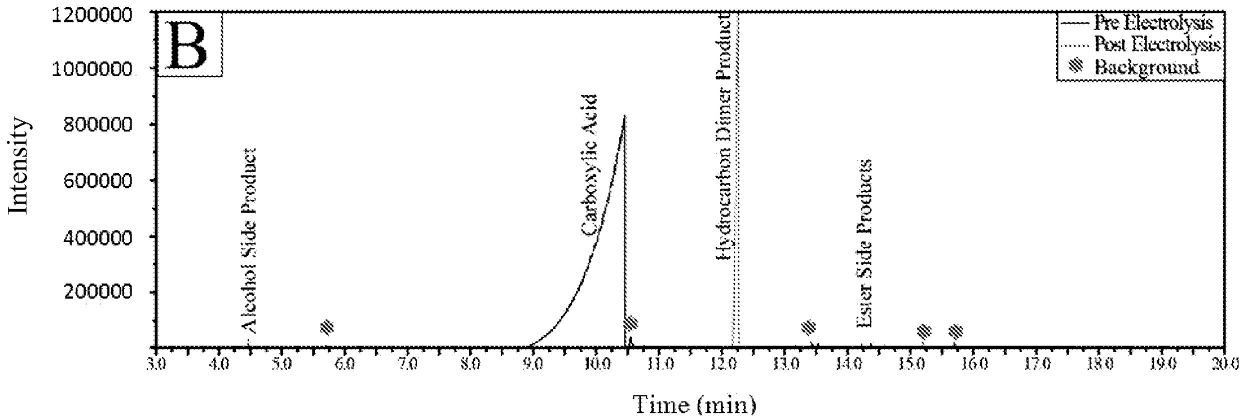
B
Intensity
Time (min)
Pre Electrolysis
Post Electrolysis
Background
Alcohol Side Product
Carboxylic Acid
Hydrocarbon Dimer Product
Ester Side Products
1200000
1000000
800000
600000
400000
200000

FIG. 2B

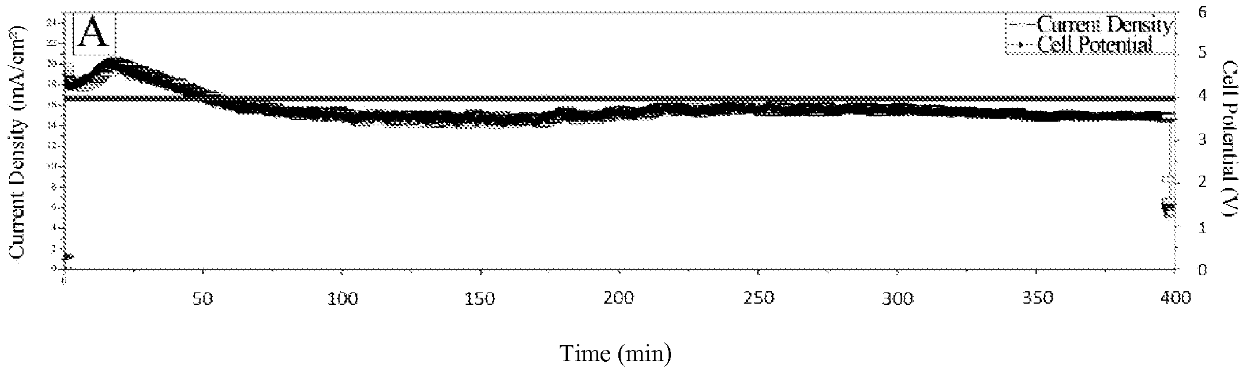
A
Current Density
Cell Potential
Current Density (mA/cm²)
Cell Potential (V)
Time (min)
50
100
150
200
250
300
350
400
0
1
2
3
4
5
6

FIG. 3A

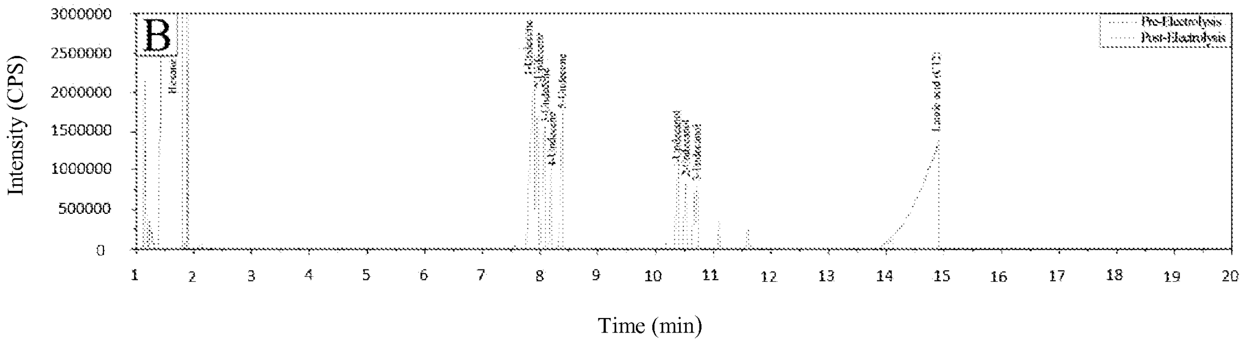
B
3000000
2500000
2000000
1500000
1000000
500000
0
Intensity (CPS)
Pre-Electrolysis
Post-Electrolysis
Hexane
Lauric acid (C12)
1
2
3
4
5
6
7
8
9
10
11
12
13
14
15
16
17
18
19
20
Time (min)

FIG. 3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100331170 A
- US 20080245671 A
- US 5580430 A